# EUROPÄISCHE PATENTSCHRIFT

(11) **EP 2 207 661 B1**
(45) Veröffentlichungstag und Bekanntmachung des Hinweises auf die Patenterteilung: **27.06.2012**
(21) Anmeldenummer: 08840846.3
(22) Anmeldetag: 14.10.2008
(51) Int. Cl.: B29C 47/12, B60J 10/00, B29C 43/06, B29C 49/00, B29C 47/02, B29C 47/06

(54) **VERFAHREN ZUR HERSTELLUNG EINER EINLAGE, INSBESONDERE VERSTÄRKUNGSEINLAGE, FÜR EINEN DICHTUNGSSTRANG**
PROCESS FOR PRODUCING AN INSERT, IN PARTICULAR A REINFORCING INSERT, FOR A LINEAR SEAL
PROCÉDÉ POUR PRODUIRE UNE GARNITURE, NOTAMMENT UNE GARNITURE DE RENFORT, POUR UN BOURRELET D'ÉTANCHÉITÉ

(30) Priorität: 19.10.2007 DE 102007050523
(43) Veröffentlichungstag der Anmeldung: 21.07.2010
(73) Patentinhaber: SaarGummi technologies S.à.r.l., 5445 Schengen (LU)
(72) Erfinder: KAST, Christian, 66663 Merzig (DE); KOTZ, Stefan, 66663 Merzig (DE)
(74) Vertreter: Bernhardt, Winfrid
(86) Internationale Anmeldenummer: PCT/EP2008/008673
(87) Internationale Veröffentlichungsnummer: WO 2009/052974

(56) Entgegenhaltungen:
- EP-A- 1 834 823
- WO-A1-2006/092734
- DE-A1- 19 902 760
- FR-A- 2 886 202
- GB-A- 2 310 879
- US-A- 6 096 975
- US-A1- 2003 160 356
- US-B1- 6 742 255

## Beschreibung

Die Erfindung betrifft ein Verfahren zur Herstellung einer strang- und im Querschnitt U-förmigen Verstärkungseinlage für einen Dichtungsstrang, insbesondere zur Abdichtung von Türen, Klappen und Fenstern an Fahrzeugkarosserien, wobei die Einlage in Stranglängsrichtung regelmäßig wiederkehrende Querschnittsänderungen aufweist, und wobei in dem Verfahren ein die strangförmige Verstärkungseinlage bildender Materialstrom einer Verformungseinrichtung zugeführt wird, die das Material unter Bildung oder im Hinblick auf die Bildung der Querschnittsänderungen formt und wenigstens ein Formungselement aufweist, das während der Formung mit dem geformten Material in Stranglöngsrichtung mitbewegt und dann auf einer von dem Material entfernten Bahn in eine Ausgangsposition für die Formung zurückgeführt wird, wobei durch mehrere, sich in Stranglängsrichtung mit dem geformten Material mit bewegende Formungselemente ein sich in Stranglängsrichtung erstreckender Formungskanal und in dem Formkanal die im Querschnitt U-förmige Verstärkungseinlage oder eine Vorform der Verstärkungseinlage gebildet wird.

Bekanntermaßen werden im Querschnitt U-förmige Verstärkungseinlagen in Dichtungsstränge eingebettet, die mit U-förmigen Befestigungsabschnitten auf einen von der Fahrzeugkarosserie vorstehenden Flansch aufzustecken sind. Um den Dichtungsstrang z.B. um eine Ecke herum zu verlegen, bedarf es einer gewissen Flexibilität der Verstärkungseinlage. Herkömmlich werden Verstärkungseinlagen aus Stahl- oder Aluminiumblech hergestellt und Schwachstellen bildende Querschnittsänderungen durch Einschnitte oder Ausstanzungen im Blech erzeugt.

Verfahren zur Herstellung einer strangförmigen Einlage für einen Dichtungsstrang gehen aus der WO 2006092734 A1, der US 6,742,255 B1 sowie der GB 2310879 A hervor. In allen Fällen wird ein Materialstrang durch zahnradartig, mit peripheren positiven und negativen Formungselementen ineinandergreifende Formungsräder verformt, wobei der mehr oder weniger fließfähige Materialstrom dem Eingriffsbereich in tangentialer Richtung zugeführt wird.

Der Erfindung liegt die Aufgabe zugrunde, ein neues Verfahren für die Erzeugung von Einlagen für Dichtungsstränge zu schaffen, das die Herstellung von Dichtungssträngen mit verbesserten Eigenschaften und erhöhter Geschwindigkeit ermöglicht.

Dass diese Aufgabe lösende Verfahren nach der Erfindung ist dadurch gekennzeichnet, dass der Formungskanal durch mehrere Anordnungen von Formungselementen, in denen die Formungselemente in der Art der Glieder einer Raupenkette miteinander verbunden oder verbindbar sind, gebildet wird, wobei die Länge des Formungskanals, die Geschwindigkeit der Materialbewegung in Stranglängsrichtung und die Geschwindigkeit der Materialabkühlung durch die Formungselemente so gewählt werden, dass das Material erstarrt, bevor es das andere Kanalende erreicht.

Das neue Herstellungsverfahren erlaubt die Herstellung von Einlagen für Dichtungsstränge insbesondere aus Kunststoffmaterialien einschließlich Duroplasten. Es ermöglicht, Dichtungsstränge mit verringertem Gewicht herzustellen. Durch die Verwendung von Kunststoffeinlagen geht von den Dichtungssträngen im Unterschied zu Stahl- oder Aluminiumblecheinlagen keinerlei Korrosionsgefahr mehr aus. Das Zerschneiden des Dichtungsstrangs in Teilstücke ist wesentlich erleichtert.

Während die Einlage in regelmäßigen Abständen z.B. Elemente zur Befestigung des Dichtungsstrangs an einem Träger aufweisen könnte, geht es in einer bevorzugten Ausführungsform der Erfindung um die Herstellung von Verstärkungseinlagen mit in Stranglängsrichtung aufeinander folgenden, Biegungen des Dichtungsstrangs erleichternden Schwachstellen.

Der Formungsbereich kann z.B. durch mehrere Anordnungen von Formungselementen gebildet sein kann, die beispielsweise in der Art der Glieder einer Raupenkette miteinander verbunden sind. An gegenüberliegenden Längsseiten der Raupenketten laufen die Formungselemente dann jeweils, ggf. paarweise, zu dem Formungsbereich bzw. geschlossenen Kanal zusammen.

Zur Führung und Rückführung der Formungselemente im verbundenen oder unverbundenen Zustand sind im Übrigen unterschiedlichste Führungseinrichtungen denkbar, wobei die Rückführung der Formungselemente z.B. mit höherer Geschwindigkeit erfolgen kann als die Mitbewegung der Formungselemente bei der Formung des Materials. Entsprechend kann die Anzahl der erforderlichen Formungselemente gering gehalten werden.

Der Materialstrom kann als für die Zwecke der Zuführung formbeständiger, aber durch das Formungselement verformbarer Strang zugeführt oder als flüssiger Strom geringerer Viskosität an einem Ende des Kanals, ggf. innerhalb des Kanals, freigesetzt werden, wobei die Länge des Kanals, die Geschwindigkeit der Materialbewegung in Stranglängsrichtung und ggf. die Geschwindigkeit der Materialkühlung durch die Formungselemente so gewählt werden, dass das Material vor Erreichen des anderen Kanalendes erstarrt und der den Kanal verlassende Strang stabil ist.

Der Materialstrom kann in dem Kanal mit Hilfe einer in Kanallängsrichtung eingeschobenen Zuführungslanze freigesetzt werden, wobei die Zuführungslanze an einer Endstirnfläche oder einer Mantelfläche eine Materialaustrittsöffnung aufweist.

Der Materialstrom, der z.B. mit einer Geschwindigkeitskomponente auf die Innenwand des Kanals gerichtet ist, kann durch inneren Überdruck oder/und äußeren Unterdruck gegen die Innenwand des Kanals gedrückt werden, wobei er sich den entsprechenden Wandkonturen unter Formung anpasst.

Der innere Überdruck lässt sich mit Hilfe einer in der Endstirnfläche öffnenden oder aus der Endstirnfläche herausgeführten Druckleitung erzeugen, an deren Ende z.B. eine Drucksperre, die den Kanal verschließt, angebracht sein kann. Äußerer Unterdruck lässt sich über Druckleitungen anlegen, die durch die Formungselemente hindurch führen.

Vorzugsweise ist die Austrittsöffnung der Zuführungslanze im Querschnitt an den Querschnitt des Kanals und damit den Querschnitt der Einlage angenähert.

In weiterer Ausgestaltung der Erfindung werden zur Bildung von Schwachstellen in Stranglängsrichtung aufeinander folgende Ausbuchtungen geformt und die Ausbuchtung, insbesondere unter Bildung von Materialausnehmungen, vorzugsweise durch Schnitte in zur Stranglängsrichtung parallelen Ebenen abgetrennt. Neben Messern lassen sich zur Bildung solcher Schnitte beispielsweise auch Heizdrähte, Laserstrahlen, Flüssigkeitsstrahlen oder Gasstrahlen verwenden. Auch eine Abtrennung der Ausbuchtungen durch Abfräsen ist möglich. Zur Bildung der Schwachstellen bedarf es nicht unbedingt der Materialausnehmungen bzw. Durchbrüche. Materialverdünnungen oder/und geeignete Materialgeometrien reichen ggf. aus.

In dem Kanal kann ein rundum geschlossener Strang als Vorform mit kastenförmigem Querschnitt gebildet und eine Verstärkungseinlage mit U-förmigem Querschnitt durch Abschneiden einer Kastenseite oder Trennen zweier einander gegenüberliegender Kastenseiten in einem zur Stranglängsrichtung parallelen Schnitt erzeugt werden. Während die Einlage getrennt von der Herstellung des Dichtungsstrangs erzeugt werden kann, wird sie in weiterer Ausgestaltung der Erfindung bei laufender Fertigung einer Extrusionseinrichtung für die Herstellung des Dichtungsstrangs zugeführt und in den extrudierten Dichtungsstrang ganz oder teilweise eingebettet, d.h. die Herstellungseinrichtung für die Einlage ist der Herstellungseinrichtung für den Dichtungsstrang unmittelbar vorgeschaltet.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Anlage, in welcher eine Verstärkungseinlage nach dem erfindungsgemäßen Verfahren hergestellt wird,
- Fig. 2: eine die Funktion der Anlage von Fig. 1 erläuternde Darstellung,
- Fig. 3 bis 6: Detaildarstellungen der Anlage von Fig. 1,
- Fig. 7 bis 9: Detaildarstellungen einer Anlage, in der eine Verstärkungseinlage gemäß einem zweiten Ausführungsbeispiel für das erfindungsgemäße Verfahren hergestellt wird,
- Fig. 10 und 11: eine weitere Anlage, in der eine Verstärkungseinlage gemäß einem dritten Ausführungsbeispiel für das erfindungsgemäße Verfahren hergestellt wird, und
- Fig. 12 bis 14: Detaildarstellungen der Anlage von Fig. 10 und 11.

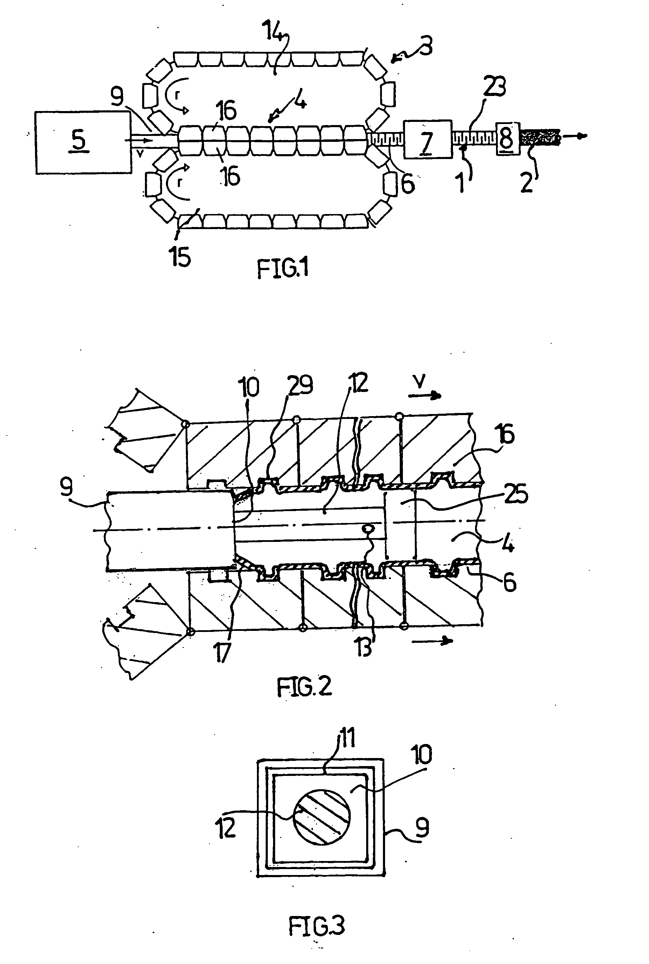

Bei einem anhand der Figuren 1 bis 6 beschriebenen Verfahren zur Herstellung einer Verstärkungseinlage 1 für einen Dichtungsstrang 2 wird eine Formungseinrichtung 3 verwendet, die einen Formungskanal 4 aufweist, in den mit Hilfe einer Materiatzuführungseinrichtung 5 an einem Ende fließfähiges Material eingegeben wird. In dem gezeigten Ausführungsbeispiel handelt es sich um einen erhitzten thermoplastischen Kunststoff.

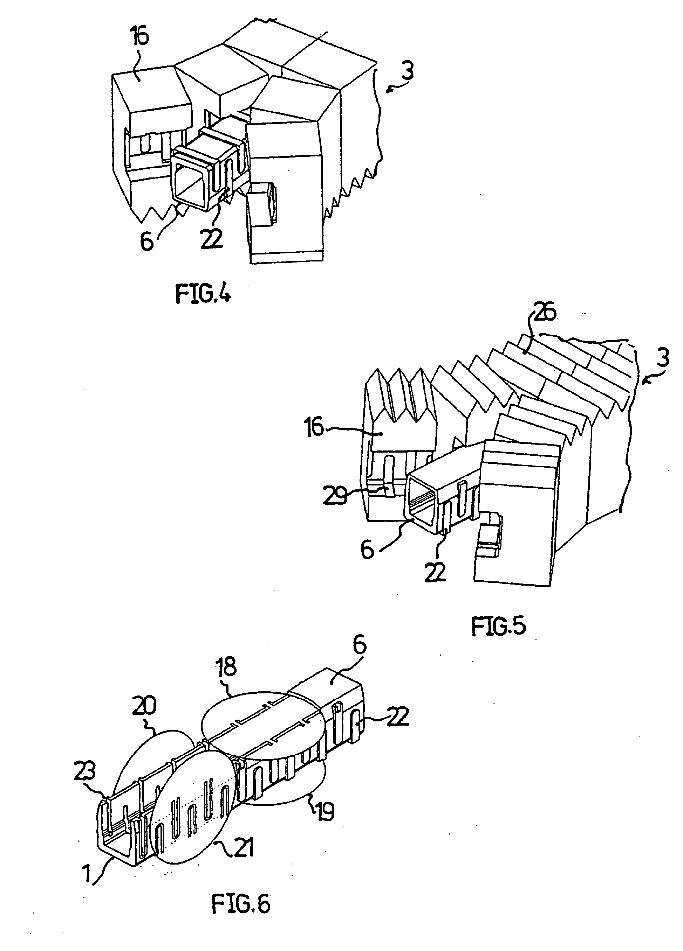

Ein durch die Formungseinrichtung 3 aus dem Kunststoff hergestellter Strang 6 durchläuft eine anhand von Fig. 6 näher beschriebene Bearbeitungseinrichtung 7. Die durch die Bearbeitungseinrichtung 7 fertiggestellte, laufend gefertigte Verstärkungseinlage gelangt dann in eine Extrusionseinrichtung 8, in welcher sie während der Extrusion des Dichtungsstrangs 2 in den Dichtungsstrang 2 eingebettet wird.

Die Materialzuführungseinrichtung 5 umfasst eine Zuführungslanze 9, welche, wie insbesondere aus Fig. 2 hervorgeht, in dem betreffenden Ausführungsbeispiel axial in den Formungskanal 4 hineinragt und an einer Endstirnfläche 10 eine in diesem Fall quadratische Materialaustrittsöffnung 11 in Form eines geschlossenen Ringes aufweist. Von der Mitte der Endstirnfläche 10 steht in den Formungskanal 4 eine Druckleitung 12 mit einer Luftaustrittsöffnung 13 weiter hinein vor. Eine pfropfenartige Drucksperre 25 ermöglicht die Erzeugung eines Innendrucks. Abweichend von dem gezeigten Ausführungsbeispiel könnte die Lanze auch vor dem Formungskanal, ggf. unmittelbar vor dem Formungskanal, enden.

Die Formungseinrichtung 3 umfasst in dem gezeigten Ausführungsbeispiel zwei Anordnungen 14 und 15 aus Formungselementen 16, die jeweils in der Art von Raupenkettengliedern miteinander verbunden sind. An einander gegenüberliegenden Längsseiten der in entgegengesetzten Drehrichtungen umlaufenden Raupenkettenanordnungen 14 und 15 treffen die Formungselemente 16 jeweils paarweise zusammen, um den Formungskanal 4 zu bilden.

Wie die Fig. 4 und 5 zeigen, weisen die Formungselemente 16 eine Zahnung auf, in welche jeweils ein die Anordnungen 14 und 15 zum Umlauf antreibendes Zahnrad oder eine antreibende Schnecke (nicht gezeigt) eingreifen kann. Der Antrieb kann so erfolgen, dass die mit Spiel verbundenen Formungselemente in Richtung des Kanals 4 zusammengeschoben werden und der Kanal 4 dadurch abgedichtet wird.

Im Betrieb der vorangehend beschriebenen Anlage tritt aus der Materialaustrittsöffnung 11 der Lanze 9 kontinuierlich mit der Geschwindigkeit v ein Strom 17 des zur Fließfähigkeit erhitzten thermoplastischen Materials, z.B. Polypropylen, aus. Entsprechend dem Kastenprofilquerschnitt der Materialaustrittsöffnung 11 ist der Materialstrom 17 der Querschnittsform des Formungskanals 4 angepasst und schließlich im Querschnitt bereits dem in der Formungseinrichtung 3 zu bildenden Strang 6 angenähert.

In dem schlauchförmigen Materialstrom 17, der aus der Materialaustrittsöffnung 11 mit einer Komponente in Richtung zur Innenwand des Formungskanals 4 austritt, wird mit Hilfe der Druckleitung 9 ein Innendruck erzeugt, so dass sich das fließfähige Material des Stroms 17 an die Innenwände des Formungskanals 4 anlegt und entsprechend der Kontur der Formungselemente 16 geformt wird, wie insbesondere Fig. 2 verdeutlicht.

Die Geschwindigkeit v, mit der die Formungselemente 16 bewegt werden, entspricht etwa der Geschwindigkeit v, mit welcher das Material zugeführt wird. In Längsrichtung des Formungskanals 4 kommt es daher zu keinerlei Relativbewegung zwischen dem gebildeten Strang 6 und den Formungselementen 16. Die Länge des Formungskanals 4 und die Zuführungsgeschwindigkeit v sind so gewählt, dass das Material innerhalb des Formungskanals erstarrt, bevor es das der Zuführungseinrichtung 5 abgewandte Ende des Formungskanals 4 erreicht hat. Es versteht sich, dass die den Formungskanal 4 bildenden Formungselemente 16 hierfür auch geeignet temperiert, insbesondere gekühlt, werden können.

Der gemäß Fig. 4 und 5 die Formungseinrichtung 3 verlassende Strang 6 mit kastenartigem Querschnitt wird in der Bearbeitungseinrichtung 7 durch Schnitte parallel zur Stranglängsrichtung einer Schneidbearbeitung unterzogen, wie dies in Fig. 6 dargestellt ist. Ein Messer 18 schneidet eine der Kastenwände weg und erzeugt so einen U-förmigen Querschnitt. Weitere Messer 19,20 und 21 schneiden in der Formungseinrichtung 3 erzeugte Ausbuchtungen 22 ab und bilden auf diese Weise Randausnehmungen und Durchbrüche 23. So entsteht die biegsame Verstärkungseinlage 1, welche in der Extrusionseinrichtung 8 in den dort laufend erzeugten Dichtungsstrang 2 ganz oder teilweise eingebettet wird.

In den nachfolgenden Figuren sind gleiche oder gleichwirkende Teile mit derselben Bezugszahl wie in den vorangehenden Figuren bezeichnet, wobei der betreffenden Bezugszahl der Buchstabe a bzw. b beigefügt ist.

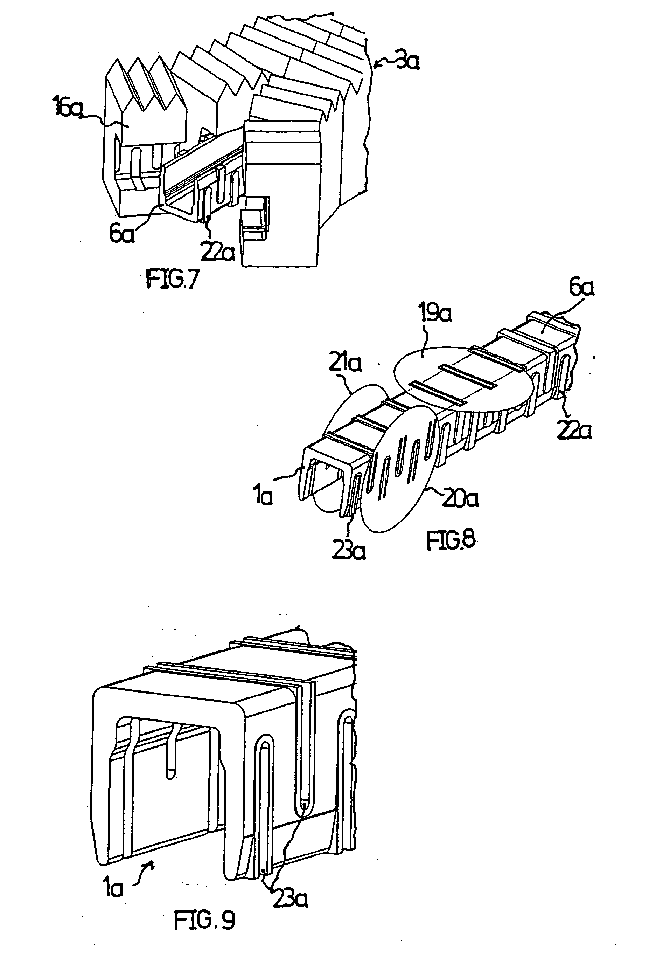

Eine in Fig. 8 ausschnittsweise gezeigte Formungseinrichtung 3a mit Formungselementen 16a bildet einen Strang 6a, der bereits einen U-förmigen Querschnitt aufweist. Entsprechend ist der Querschnitt einer (nicht gezeigten) Materialaustrittsöffnung an diese Form angenähert und ebenfalls U-förmig ausgebildet. Das aus der Materialaustrittsöffnung ausgetretene fließfähige Material wird bei diesem Ausführungsbeispiel nicht durch innerhalb des Formungskanals erzeugten Innendruck sondern äußeren, über Druckleitungen in den Formungselementen 16a angelegten Unterdruck gegen die betreffenden Innenwände des Formungskanals gedrückt, so dass den Ausbuchtungen 22 entsprechende Ausbuchtungen 22a entstehen. Gemäß Fig. 8 werden diese Ausbuchtungen durch Messer 19a bis 21 a unter Bildung von Randausnehmungen und Durchbrüchen 23a abgeschnitten. Es entsteht die ausschnittsweise in Fig. 9 gezeigte biegsame Verstärkungseinlage 1a.

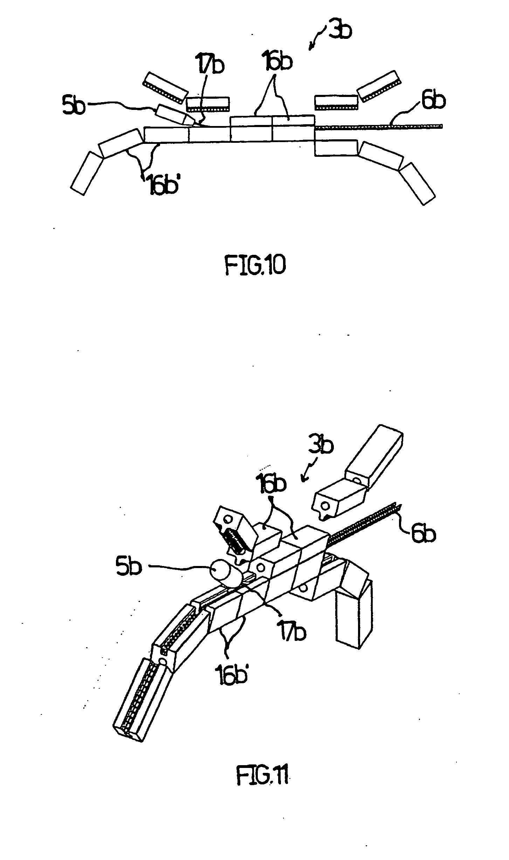

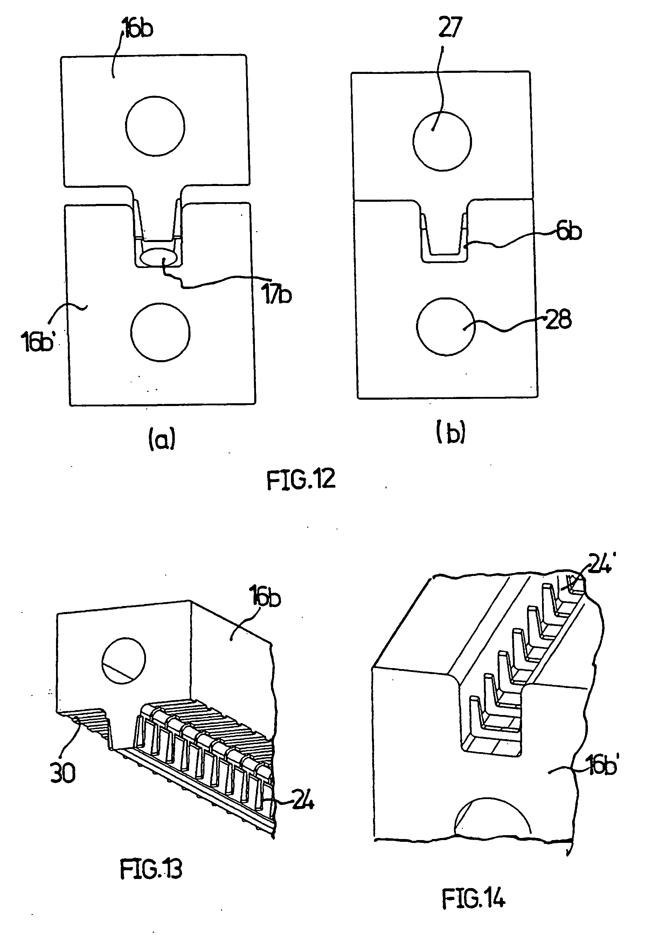

Aus den Fig. 10 bis 14 geht eine Formungseinrichtung 3b mit auf einer Bahn umlaufenden Formungselementen 16b und 16b' hervor. Wie insbesondere Fig. 12 erkennen lässt, wird durch die Formungselemente ein im Querschnitt ovaler Materialstrang 17b in einen Strang mit U-förmigem Querschnitt verwandelt. Der Materialstrang 17b ist insoweit formbeständig, dass er während der Zuführung seine Querschnittsform etwa beibehält, jedoch insoweit fließfähig, dass er durch die jeweils beteiligten Formungselemente 16b und 16b' durch Materialverdrängung in die genannte U-Form gebracht werden kann. Durch Vorsprünge 24 bzw. 24' an den Formungselementen 16b bzw. 16b' werden den Ausbuchtungen 22 entsprechende Ausbuchtungen gebildet, die durch eine Schneideinrichtung, wie sie in Fig. 8 dargestellt ist, abgeschnitten werden können. Hiervon abweichend ließen sich durch die Vorsprünge 24,24' die Durchbrüche 23a auch direkt bilden. Verbleibende dünne Materialhäute könnten z.B. mit Hilfe einer Flamme abgeschmolzen werden.

Bei dem in den Figuren 10 bis 14 beschriebenen Beispiel für eine Fertigungsanlage bilden die unteren Formungselemente 16b' einen längeren Lauf als die oberen Formungselemente 16b. Die Formungselemente 16b' bilden daher eine von oben zugängliche Rinne, in die wie weiter unten ausführlicher dargelegt ist, auch flüssiges Material eingefüllt werden kann. Ferner besteht die Möglichkeit, den zugeführten Materialstrang 17b während der Zuführung auf eine geeignete Temperatur zu erhitzen, z.B. durch Infrarotbestrahlung. Vorzugsweise wird der Strang jedoch als extrudierter und damit bereits erhitzter Strang zugeführt.

Die Formung des Strangs erfolgt zweckmäßig langsam derart, dass sich das jeweils formende Elemente 16b während der Formung über ein Mehrfaches seiner Länge bewegt. Durch Kanäle 30 hindurch kann bei der Formung überschüssiges Material abfließen. Durch Anlegen von Unterdruck ließe sich Blasen- oder sonstige Hohlraumbildung verhindern.

Während in Bezug auf die anhand der Figuren 10 bis 14 beschriebene Anlage bisher von einer Verformung eines zugeführten Strangs aus verhältnismäßig zähfließendem Material ausgegangen wurde, kann die beschriebene Anlage auch genutzt werden, um flüssiges Material von weitaus geringerer Viskosität zu verarbeiten. In der durch die Formungselemente 16b' gebildeten Rinne wird zugeführtes flüssiges Material durch die Bewegung der Formungselemente 16b' genügend schnell in Richtung Formungskanal abgeführt, bevor es in entgegengesetzter Richtung fließen kann. Das Material lässt sich auch innerhalb des gebildeten Formungskanals freizusetzen, wobei der Formungskanal auch schräg von oben nach unten oder sogar vertikal verlaufen kann. Das innerhalb des Formungskanals erstarrende Material bildet einen Verschluss, vor dem sich das eingegossene flüssige Material staut und durch seinen Schweredruck den Formungskanal vollständig ausfüllt.

Bei dem vorangehend beschriebenen Verfahren könnten als in die Einlage einzubettende Elemente z.B. Fäden oder Glasfaserstränge zugeführt werden. Das die Einlage bildende Material könnte mehrere unterschiedliche Komponenten, z.B. Kombinationen verschiedener Thermoplaste, aufweisen.

## Patentansprüche

1. Verfahren zur Herstellung einer strang- und im Querschnitt U-förmigen Verstärkungseinlage (1) für einen Dichtungsstrang (2), insbesondere zur Abdichtung von Türen, Klappen und Fenstern an Fahrzeugkarosserien, wobei die Einlage (1) in Stranglängsrichtung regelmäßig wiederkehrende Querschnittsänderungen aufweist, und wobei in dem Verfahren ein die strangförmige Verstärkungseinlage (1) bildender Materialstrom (17) einer Formungseinrichtung (3) zugeführt wird, die das Material unter Bildung oder im Hinblick auf die Bildung der Querschnittsänderungen formt und wenigstens ein Formungselement (16) aufweist, das während der Formung mit dem geformten Material in Stranglöngsrichtung mitbewegt und dann auf einer von dem Material entfernten Bahn in eine Ausgangsposition für die Formung zurückgeführt wird, wobei durch mehrere, sich in Stranglängsrichtung mit dem geformten Material mitbewegende Formungselemente (16) ein sich in Stranglängsrichtung erstreckender Formungskanal (4) und in dem Formungskanal (4) die im Querschnitt U-förmige Verstärkungseinlage oder eine Vorform der Verstärkungseinlage gebildet wird,
**dadurch gekennzeichnet,**
**dass** der Formungskanal (4) durch mehrere Anordnungen (3) von Formungselementen (16), in denen die Formungselemente (16) in der Art der Glieder einer Raupenkette miteinander verbunden oder verbindbar sind, gebildet wird, wobei die Länge des Formungskanals (4), die Geschwindigkeit der Materialbewegung in Stranglängsrichtung und die Geschwindigkeit der Materialabkühlung durch die Formungselemente (16) so gewählt werden, dass das Material erstarrt, bevor es das andere Kanalende erreicht.

2. Verfahren nach Anspruch 1,
**dadurch gekennzeichnet,**
**dass** als Einlage eine Verstärkungseinlage (1) mit in Stranglängsrichtung aufeinanderfolgenden, Biegungen des Dichtungsstrangs erleichternden Schwachstellen (23) hergestellt wird.

3. Verfahren nach Anspruch 1 oder 2,
**dadurch gekennzeichnet,**
**dass** der Materialstrom (17) als für die Zwecke der Zuführung formbeständiger, aber durch den Formungskanal (4) verformbarer Strang zugeführt oder als flüssiger Strom an einem Ende des Formungskanals (4) freigesetzt wird.

4. Verfahren nach einem der Ansprüche 1 bis 3,
**dadurch gekennzeichnet,**
**dass** der Materialstrom (17) in dem Formungskanal (4) mit Hilfe einer in den Formungskanal (4) in dessen Längsrichtung eingeschobenen Zuführungslanze (9) freigesetzt wird, wobei die Zuführungslanze (9) an einer Endstirnfläche (10) oder einer Mantelfläche eine Materialaustrittsöffnung (11) aufweist.

5. Verfahren nach einem der Ansprüche 1 bis 4,
**dadurch gekennzeichnet,**
**dass** der Materialstrom (17) durch inneren Überdruck, äußeren Unterdruck, Verdrängung durch ein Formungselement (16b) oder/und durch Schweredruck des flüssigen Materials gegen die Innenwand des Formungskanals (4) gedrückt wird.

6. Verfahren nach Anspruch 5,
**dadurch gekennzeichnet,**
**dass** der innere Überdruck mit Hilfe einer in der Endstirnfläche öffnenden oder aus der Endstirnfläche (10) herausgeführten Druckleitung (12) erzeugt wird.

7. Verfahren nach einem der Ansprüche 4 bis 6,
**dadurch gekennzeichnet,**
**dass** die Materialaustrittsöffnung (11) im Querschnitt an den Querschnitt des Formungskanals (4) angenähert ist.

8. Verfahren nach einem der Ansprüche 2 bis 7,
**dadurch gekennzeichnet,**
**dass** zur Bildung der Schwachstellen (23) in Stranglängsrichtung aufeinander folgende Ausbuchtungen (22) geformt und die Ausbuchtungen (22), insbesondere unter Bildung von Materialausnehmungen (23), vorzugsweise durch Schnitte in einer zur Stranglängsrichtung parallelen Ebene, abgetrennt werden.

9. Verfahren nach einem der Ansprüche 1 bis 8,
**dadurch gekennzeichnet,**
**dass** in dem Formungskanal (4) ein rundum geschlossener Strang (6) mit kastenförmigem Querschnitt erzeugt und eine Verstärkungseinlage (1) mit U-förmigem Querschnitt durch Abschneiden einer Kastenseite oder Trennen zweier Kastenseiten in einer zur Stranglängsrichtung parallelen Schnittebene erzeugt wird.

10. Verfahren nach einem der Ansprüche 1 bis 9,
**dadurch gekennzeichnet,**
**dass** die Verstärkungseinlage (1) bei laufender Fertigung einer Extrusionseinrichtung (8) für die Herstellung des Dichtungsstrangs (2) zugeführt und in den extrudierten Dichtungsstrang (2) ganz oder teilweise eingebettet wird.

## Claims

1. Method for producing a strand-shaped reinforcing insert (1), which is U-shaped in cross section, for a sealing strand (2), in particular for sealing doors, flaps and windows on vehicle bodies, wherein the insert (1) has cross-sectional changes which recur regularly in the longitudinal direction of the strand, and wherein, in the method, a material flow (17) forming the strand-shaped reinforcing insert (1) is fed to a moulding device (3) which moulds the material with formation or with regard to the formation of the cross-sectional changes, and has at least one moulding element (16) which, during the moulding, moves together with the moulded material in the longitudinal direction of the strand and is then guided back on a path remote from the material into a starting position for the moulding, therein a plurality of moulding elements (16) moving together with the moulded Material in the longitudinal direction of the strand results in the formation of a moulding channel (4) extending in the longitudinal direction of the strand and in the formation of the reinforcing insert, which is U-shape in cross section, or of a preform of the reinforcing insert in the moulding channel (4), **characterized in that** the moulding channel (4) is formed by a plurality of arrangements (3) of moulding elements (16), in which the moulding elements (16) are connected or are connectable to one another in the manner of the links of a caterpillar tread, wherein the length of the moulding channel (4), the speed of the maternal movement in the longitudinal direction of the strand and the speed of the material cooling by the moulding elements (16) are selected in such a manner that the Material solidifies before it reaches the other end of the channel.

2. Method according to Claim 1, **characterized in that** a reinforcing insert (1) with points of weakness (23) which follow one another in the longitudinal direction of the strand and facilitate bonding of the sealing strand is produced as the insert.

3. Method according to Claim 1 or 2, **characterized in that** the material flow (17) is fed in the form of a strand which is dimensionally stable for feeding purposes, but is deformable by the moulding channel (4), or is released in the form of a liquid flow at one end of the moulding channel (4).

4. Method according to one of Claims 1 to 3, **characterized in that** the material flow (17) in the moulding channel (4) is released with the aid of a seeding lance (9) which is pushed into the moulding channel (4) in the longitudinal direction thereof, wherein the feeding lance (9) has a material outlet opening (11) on an end face (10) or a lateral area.

5. Method according to one of Claims 1 to 4, **characterized in that** the material flow (17) is pressed against the inner wall of the moulding channel (4) by interval positive pressure, external negative pressure, displacement by a moulding element (16b) organ by gravitational pressure of the liquid Material.

6. Method according to Claim 5, **characterized in that** the inner positive pressure is generated with the aid of a pressure line (12) opening in the end face or led out of the end face (10).

7. Method according to one of Claims 4 to 6, **characterized in that** the material outlet opening (11) is approximate in cross section to the cross section of the moulding channel (4).

8. Method according to one of Claims 2 to 7, **characterized in that** bulges (22) which follow one another in the longitudinal direction of the strand are moulded in order to form the points of weakness (23), and the bulges (22) are severed, in particular with formation of material recesses (23), preferably by means of incisions in a plane parallel to the longitudinal direction of the strand.

9. Method according to one of Claims 1 to 8, **characterized in that** a strand (6) which is closed all the way around and has a box-shaped cross section is produced in the moulding channel (4), and a reinforcing insert (1) with a U-shaped cross section is produced by cutting off one box side or revering two box sides in a sectional plane parallel to the longitudinal direction of the strand.

10. Method according to one of claims 1 to 9, **characterized in that** the reinforcing insert (1) is fed curing continuous manufacturing to an extrusion device (8) for production of the stealing strand (2) and is entirely or partially embedded in the extruded sealing strand (2).

## Revendications

1. Procédé pour la fabrication d'une garniture de renfort (1) en forme de brin et avec une section en forme de U pour un bourrelet d'étanchéité (2), en particulier pour l'étanchéité de portes, clapets et fenêtres sur des carrosseries de voitures, la garniture (1) présentant, dans le sens longitudinal du brin des modifications de section qui se répètent réguliérement et un flux de matière (17) formant la garniture de renfort (1) en forme de brin étant alimenté, au cours du procédé, dans une installation de façonnage (3), qui façonne la matière en formant ou en vue de la formation des modifications de section et qui présente au moins un élément de façonnage (16) qui se déplace, pendant le façonnage, conjointement avec la matière façonnée dans le sens longitudinal du brin et qui est ensuite ramené sur une voie éloignée de la matière dans une position de départ pour le façonnage, plusieurs éléments de façonnage (16) se déplaçant conjointement dans le sens longitudinal avec la matière façonnée formant un canal de façonnage (4) s'étendant dans le sens longitudinal du brin et la garniture de renfort présentant une section en forme de U ou une préforme de la garniture de renfort étant formée dans le canal de façonnage (4), **caractérisé en ce que** le canal de façonnage (4) est formé par plusieurs dispositions (3) d'éléments de façonnage (16), dans lesquelles les éléments de façonnage (16) sont reliés ou peuvent être reliés les uns aux autres comme les maillons d'une chenille, la longueur du canal de façonnage (4), la vitesse de déplacement de la matière dans le sens longitudinal du brin et la vitesse de refroidissement de la matière à travers les éléments de façonnage (16) étant choisies de manière telle que la matière est rigidifiée avant qu'elle n'atteigne l'autre extrémité du canal.

2. Procédé selon la revendication 1, **caractérisé**
**en ce qu'**on fabrique, comme garniture, une garniture de renfort (1) présentant des points faibles (23) successifs dans le sens longitudinal du brin, facilitant les flexions du bourrelet d'étanchéité.

3. Procédé selon la revendication 1 ou 2, **caractérisé**
**en ce que** le flux de matière (17) est alimenté sous forme de brin présentant une forme résistante en vue de l'alimentation mais déformable par le canal de façonnage (4) ou sous forme de flux liquide en une extrémité du canal de façonnage (4).

4. Procédé selon l'une quelconque des revendications 1 à 3, **caractérisé**
**en ce que** le flux de matière (17) est libéré dans le canal de façonnage (4) à l'aide d'une lance d'alimentation (9) insérée dans le sens longitudinal dans le canal de façonnage (4), la lance d'alimentation (9) présentant, en une face frontale d'extrémité (10) ou en une surface enveloppante, une ouverture (11) de sortie de matière.

5. Procédé selon l'une quelconque des revendications 1 à 4, **caractérisé**
**en ce que** le flux de matière (17) est poussé sous l'effet d'une surpression interne, d'une dépression externe, d'un refoulement par un élément de façonnage (16b) et/ou par la pression gravitationnelle de la matière liquide contre la paroi interne du canal de façonnage (4).

6. Procédé selon la revendication 5, **caractérisé**
**en ce que** la surpression interne est produite à l'aide d'une conduite de pression (12) s'ouvrant dans la face frontale d'extrémité ou passant à travers la face frontale d'extrémité (10).

7. Procédé selon l'une quelconque des revendications 4 à 6, **caractérisé**
**en ce que** l'ouverture (11) de sortie de matière a une section proche de la section du canal de façonnage (4).

8. Procédé selon l'une quelconque des revendications 2 à 7, **caractérisé**
**en ce que** pour la formation des points faibles (23), des renflements (22) successifs dans le sens longitudinal du brin sont formés et les renflements (22) sont séparés, en particulier en formant des évidements de matière (23), de préférence par des coupes dans un plan parallèle au sens longitudinal du brin.

9. Procédé selon l'une quelconque des revendications 1 à 8, **caractérisé**
**en ce qu'**on produit, dans le canal de façonnage (4), un brin (6) à périphérie fermée, présentant une section en forme de boîte et on produit une garniture de renfort (1) présentant une section en forme de U en découpant une face de la boîte ou en séparant deux faces de la boîte dans un plan de coupe parallèle à la direction longitudinale du brin.

10. Procédé selon l'une quelconque des revendications 1 à 9, **caractérisé**
**en ce que** la garniture de renfort (1) est alimentée, lors d'une fabrication continue, dans un dispositif d'extrusion (8) pour la fabrication du bourrelet d'étanchéité (2) et est enrobé totalement ou partiellement dans le bourrelet d'étanchéité (2) extrudé.
